(19) **Europäisches Patentamt / European Patent Office / Office européen des brevets**

(11) **EP 1 665 658 B1**

(12) **EUROPEAN PATENT SPECIFICATION**

(45) Date of publication and mention
of the grant of the patent:
**04.04.2012 Bulletin 2012/14**

(21) Application number: **04768073.1**

(22) Date of filing: **13.08.2004**

(51) Int Cl.:
*H04L 12/56* (2006.01)     *H04L 12/28* (2006.01)
*H04W 40/02* (2009.01)     *H04W 88/04* (2009.01)

(86) International application number:
**PCT/GB2004/003510**

(87) International publication number:
**WO 2005/025147 (17.03.2005 Gazette 2005/11)**

(54) **Hierarchical routing in ad-hoc networks**

Hierarchisches Routen in Ad-hoc-Netzwerken

Routage hierarchique dans des réseaux ad hoc

(84) Designated Contracting States:
**AT BE BG CH CY CZ DE DK EE ES FI FR GB GR HU IE IT LI LU MC NL PL PT RO SE SI SK TR**

(30) Priority: **09.09.2003 GB 0321096**

(43) Date of publication of application:
**07.06.2006 Bulletin 2006/23**

(73) Proprietor: **BRITISH TELECOMMUNICATIONS public limited company**
**London**
**EC1A 7AJ (GB)**

(72) Inventors:
• **ROBINSON, David, Peter**
**Oxford Oxfordshire OX4 1JU (GB)**
• **TATESON, Jane, Elizabeth**
**Woodbridge,**
**Suffolk IP13 8BB, (GB)**
• **FLOYD, Michael, Anthony**
**Welling Kent DA16 1EX (GB)**

(74) Representative: **Lidbetter, Timothy Guy Edwin**
**British Telecommunications plc**
**Intellectual Property Department**
**PPC5A, BT Centre**
**81 Newgate Street**
**London EC1A 7AJ (GB)**

(56) References cited:
**WO-A1-2005/006668**

• **STOJMENOVIC I ET AL: "POWER-AWARE LOCALIZED ROUTING IN WIRELESS NETWORKS" IEEE TRANSACTIONS ON PARALLEL AND DISTRIBUTED SYSTEMS, IEEE INC, NEW YORK, US, vol. 12, no. 11, November 2001 (2001-11), pages 1122-1133, XP001086516 ISSN: 1045-9219**
• **SINGH S ET AL: "POWER-AWARE ROUTING IN MOBILE AD HOC NETWORKS" MOBICOM '98. PROCEEDINGS OF THE 4TH ANNUAL ACM/IEEE INTERNATIONAL CONFERENCE ON MOBILE COMPUTING AND NETWORKING. DALLAS, TX, OCT. 25 - 30, 1998, ANNUAL ACM/IEEE INTERNATIONAL CONFERENCE ON MOBILE COMPUTING AND NETWORKING, NEW YORK, NY : ACM, US, 25 October 1998 (1998-10-25), pages 181-190, XP000850267 ISBN: 1-58113-035-X cited in the application**
• **STOJMENOVIC I: "POSITION-BASED ROUTING IN AD HOC NETWORKS" IEEE COMMUNICATIONS MAGAZINE, IEEE SERVICE CENTER. PISCATAWAY, N.J, US, vol. 40, no. 7, July 2002 (2002-07), pages 128-134, XP001132650 ISSN: 0163-6804**
• **GOLD R ET AL: "USE OF CONTEXT-AWARENESS IN MOBILE PEER-TO-PEER NETWORKS" PROCEEDINGS. IEEE WORKSHOP ON FUTURE TRENDS OF DISTRIBUTED COMPUTING SYSTEMS, XX, XX, 31 October 2001 (2001-10-31), pages 142-147, XP001086511**
• **HE T ET AL: "SPEED: A Real-Time Routing Protocol for Sensor Networks", , March 2002 (2002-03), pages 1-12, XP002300153,**

**Description**

This invention relates to ad hoc networking applications, in which a number of communications devices co-operate to form a communications network. There are two basic types, namely many-to-many communication, wherein the devices communicate mainly between themselves, and ad hoc edge networking, wherein the devices interface with conventional fixed networks through interface or edge devices. The communications devices form devices of a wireless network, allowing data to be relayed from an originating communications device to a destination communications device, by way of other communications devices. Such devices have a number of applications in circumstances where the communications devices are likely to be moving in unpredictable ways. A particular application scenario is a sensor network, in which data is collected from a network of mobile sensor devices, each of which is capable of taking measurements and relaying packets of data. Such devices are used by scientists taking measurements of the behaviour of the atmosphere, the sea, ice caps, lava flows or wildlife. The environments in which such devices are required to operate often have measurement points widely dispersed in both space and time. Some of the environments are hostile to human life. In some applications, such as the study of animal behaviour, human intervention could compromise the data. For these reasons the devices must be capable of operating autonomously, and transmitting the data they collect to a more convenient point using a wireless medium such as radio or sonar. Moreover it is not usually possible to provide a continuous power supply, so the useful life of a device is primarily constrained by battery life.

Other applications for such ad hoc networks, to which the invention might be applied, include "tagging" technology for monitoring the health of patients and the elderly in the community, or of the location of people subject to court orders restricting their movements. More generally, ad hoc networks can be made up of wireless laptop computers or mobile telephones in close proximity to each other. Military personnel, police or other emergency services could also use the invention when attending an incident where there are insufficient channels for all the users to communicate directly with the fixed base stations provided in the vicinity. In these cases, more conventional communication devices could become part of ad hoc wireless networks, exploiting short range transmissions and device relays towards an identified base station, or fixed network device.

Many ad hoc routing protocols have been devised. Some of the most widely known are:

- DSDV, described by C Perkins and P Bhagwat, Highly Dynamic Destination-Sequenced Distance-Device pair Routing (DSDV) for mobile computers, Proceedings of the SIGCOMM '94 Conference on Communications Architectures, Protocols and Applications, pages 234-244, August 1994
- TORA, described by VD Park and MS Corson, A Highly Adaptive Distributed routing Algorithm for Mobile Wireless Networks, Proceedings of INFOCOM '97, pages 1405-1413, April 1997
- DSR, described by DB Johnson, Routing in Ad hoc Networks of Mobile Hosts, Proceedings of the IEEE Workshop on Mobile Computing Systems and Applications, pages 158-163, December 1994

AODV, described by C Perkins, Ad hoc On Demand Distance Device pair (AODV) Routing, Internet-Draft, draft-ietf-manet-aodv-04.txt, October 1999

DSDV maintains a routing table listing the next "hop" for each reachable destination. Routes are tagged with sequence numbers, with the most recently determined route, with the highest sequence number, being the most favoured. There are periodic updates of routes and sequence numbers. TORA discovers routes on demand and gives multiple routes to a destination. Route query and update packets are sent for each destination. Although routes are established fairly quickly, there are often routing loops, leading to dropped packets. DSR uses source routing, rather than hop-by-hop routing, so each packet has a complete route, listed in its header. This protocol uses route discovery and route maintenance, with devices maintaining caches of source routes that have been learned or overheard. AODV combines route discovery and route maintenance with hop-by-hop routing. Route request packets create reverse routes for themselves back to their source devices. "Hello" messages are periodically transmitted by the devices, so that neighbours are aware of the state of local links.

A comparison of the performance of these protocols by J Broch, DA Maltz, DB Johnson, Y-C Hu, ("A Performance Comparison of Multi-Hop Wireless Ad Hoc Network Routing Protocols", Proceedings of the Fourth Annual ACM/IEEE International Conference on Mobile Computing and Networking, Mobicom '98, October 1998, Dallas, Texas), has shown widely differing results in the size of routing overhead. The total overhead is greatest for TORA, and becomes unacceptably large for a network size of thirty source devices.

Moreover, all of these prior art protocols require large processor and memory capacities, and their protocols do not take account of the energy usage required. Energy usage, along with memory and processor capacity, are particularly important in sensor networks. These typically consist of very small, very cheap microprocessors, e.g.16 bit, with 32 kilobytes of RAM. They also have a finite battery supply, which would be impractical to replace given the nature of the applications in which the sensors are to be used. It is therefore very important that any communication protocol is energy-efficient aware, and also pared to a minimum in communication overhead and memory usage. In other applications, battery and memory usage are also important considerations: a user would be unwilling to allow his mobile telephone to form part of such an ad hoc network if other users caused a significant drain on either of these resources whilst his own device was not actively engaged in a call.

A number of lightweight ad hoc routing protocols have been proposed. The work by Toh already discussed describes a wireless communication network, and a scheme to maximise the battery life of ad hoc devices in the network. S Singh, M Woo and C Raghavendra, have made a detailed study of power-conservation in ad hoc networks at the MAC and network layers ("Power-Aware Routing in Mobile Ad hoc Networks". Proceedings of the Fourth Annual ACM/IEEE International Conference on Mobile Computing and Networking (MobiCom), (Dallas, TX, Oct. 1998)). They include schemes for devices to power-down in between expected transmissions, and they take into account device load as an important factor in power consumption. Their main concern is to prevent network partitioning when gaps appear in the network as a result of devices running out of battery power. Work by WB Heinzelman, AP Chandrakasan and H Balakrishnan considers sensor networks specifically. ("Energy-Efficient Routing Protocols for Wireless Microsensor Networks", Proceedings of the 33rd International Conference on System Sciences (HICSS '00), January 2000). This work assumes variable device broadcast range. Their focus is on the use of clustering techniques to reduce bandwidth usage by, for example, data aggregation of similar data, and using predictable transmission times, co-ordinated by the cluster heads. This approach saves significant energy, compared with an always-on approach, but the routing side is simplistic and not fully developed. In particular, their experimental scenario assumes the devices could all broadcast to the base station if they chose to do so, which would not be realistic, in general, for sensor network applications. Work by A Cerpa, J elson, D Elstrin, L Girod, M Hamilton and J Zhao, refers to habitat monitoring as a driver for wireless communications technology, and focuses on power-saving by having devices switching themselves on and off according to whether they are in the vicinity of regions where interesting activity is expected, or detected by other devices. ("Habitat Monitoring: Application Driver for Wireless Communications Technology", ACM SIGCOMM Workshop on Data Communications in Latin America and the Caribbean, Costa Rica, April 2001. Work by Y. Xu, J. Heidemann, and D. Estrin again focuses on using powered- down modes for devices to conserve power, based on whether payload data is predicted or not, and on the number of equivalent devices nearby that could be used for alternate routing paths. ("Adaptive energy-conserving routing for multihop ad hoc networks", Tech. Rep. 527, USC/Information Sciences Institute, Oct. 2000) The assumption here is that the underlying routing will be based on conventional ad hoc routing protocols such as the AODV system already discussed. Sensor networks, however, typically would require a lighter weight approach to routing, where decisions are based on information from immediate neighbours only, and this knowledge needs to be conveyed succinctly, ideally as part of the packet headers for the actual data to be collected.

The University of California and the Intel Berkeley Research Lab have developed operating systems and networks for small ad hoc sensor devices, known as the Smartdust project, for which an operating system known as TinyOS has been developed (DE. Culler, J Hill, P Buonadonna, R Szewczyk, and A Woo. "A Network-Centric Approach to Embedded Software for Tiny Devices". DARPA Workshop on Embedded Software. However, the routing scheme they refer to is not power-aware, but rather uses a hierarchical structure to find shortest paths to the sinks.

Stojmenovic et al ("Power Aware Localised Routing in Wireless Networks" (IEEE Transactions on Parallel and Distributed Systems, November 2001) describe a number of features of distributed routing protocols, in the context of a knowledge of the positions of the nearest neighbours and with high connectivity and little or no node mobility So, in summary, there are established routing protocols for ad hoc networks that are too resource-intensive for sensor networks and are not power-aware; there are power-aware metrics which have not been applied to ad hoc networks; there are power-aware strategies for ad hoc sensor networks that do not optimise the routing; and there is an extensive ad hoc sensor network project without power-aware routing. Note that none of this prior work refers to highly mobile ad hoc devices, of the kind to which this invention is particularly directed.

As already discussed, prior art routing mechanisms require far more memory and processing power than is suitable for lightweight environmental sensor devices, or assume all devices can communicate directly with the sinks. Also, only the full ad hoc protocols can cope with device mobility, and these require a large communication overhead.

Because the devices are moving rapidly, even their nearest neighbours may change between data transmissions. Routing decisions must be made 'on-the-fly', using very recently gathered information.

In this specification, the term "payload data" is used to mean the useful data which it is desired to transmit, as distinct from overhead data used to control routing of the payload data. Note that there is some degree of overlap between the two types of data, as some of the data collected, e.g. relating to position or urgency may be useful in determining routing strategy.

International patent specification WO2005/006668 discloses a mobile data wireless relay device, the device having

receiving means for receiving payload data from a data source,
a buffer for storing payload data for subsequent transmission,
means for receiving status data from similar devices,

status data generation means for generating status data, the status data being derived from the quantity of data in the buffer store and the status data received from other devices, and comprising data relating to

the position of the device,
the quantity of data in the buffer store
a scalar forwarding value ($\delta$) and
a forwarding direction,

status transmitter means for transmitting status data to other devices
selection means for identifying from the status data a receiving device to which the payload data is to be forwarded, the receiving device being located in a position indicated by the forwarding direction,
payload transmission means for transmitting the payload data to the receiving device.

The wireless relay devices therefore define a preferred direction for payload data to travel. This invention provides a wireless relay device that not only identifies a transmission hop in the right direction, but forwards payload data to the neighbouring device giving the best chance of its data getting all the way back to a data sink. It requires no explicit knowledge of the topology of the network, and in particular requires no details of any hop other than the one to which it is directly connected. However, it does require some co-operation between devices in order to establish a preferred direction.

An article "SPEED: A Real Time Routing Protocol for Sensor Networks" (Tian He et al: University of Virginia, 2002), describes the use of delay between reception and transmission of data to approximate the current loading of individual nodes. However, other factors can be more significant, particularly in devices with a finite operating life.

According to one aspect of the present invention, there is provided a data relay device, the device having

receiving means for receiving payload data from a data source,
a buffer for storing payload data for subsequent transmission,
payload transmission means for transmitting the payload data to a receiving device identified as being suitable for receiving such data,
and means for determining the separation (r) of the device from other devices,
having status data generation means for generating for the device a scalar status value (h), the status value being derived from the quantity of data (N) in the buffer store and the separation (r) of the device from other devices
status value transmitter means for transmitting the status value to other devices,
means for receiving status values from similar devices,
selection means for identifying, from its own status value, and the status values received from other devices, a receiving device to which payload data may be forwarded.
wherein the selection means is arranged to only identify a suitable receiving device if the scalar status value (h) of the receiving device meets one or more threshold criteria,

characterised in that the threshold criteria include a requirement that the remaining battery power of the selected receiving device is at least sufficient to transmit all the data currently in the buffer.

Preferably the device comprises means for receiving payload data transmitted by other similar devices, as well as itself comprising a data source.

As well as the properties specified above, the status value may also be determined with reference to other properties, such as expected life time. The threshold criteria may also include a function of elapsed time from a predetermined start point. The device may also comprise condition monitoring means for monitoring the expected lifetime of the device, and adjusting the scalar status value accordingly.

The separation data may be determined from attenuation or time delay of signals received from the other devices.

The device may comprise means for determining the power that would be required to transmit payload data to an identified receiving device, and means for generating a scalar status value related to that power requirement. Preferably the identified receiving device on which the power determination is based is the device selected for transmission on a previous determination.

According to another aspect there is provided a method of operating a plurality of data relay devices, comprising:

collecting data in buffer stores in one or more such devices,
for each data relay device identifying a respective receiving device suitable for forwarding payload data to it, and transmitting the payload data to the identified receiving device,
each device defining a scalar status value (h) for the device determined by the quantity of data stored in its buffer and the separation of the device from other devices,

exchanging data between the devices relating to their status values.
each device identifying, from its own status value, and the status values received from other devices, a destination device to which payload data may be forwarded,
wherein data is only transmitted from a first device to a second device if the scalar status value of the second device meets one or more predetermined threshold criteria, and characterised in that the threshold criteria include a requirement that the remaining battery power is at least sufficient to transmit all the data currently in the buffer.

In the described embodiment the data relay devices are mobile devices communicating with each other using radio waves or other electromagnetic radiation, or by acoustic signals such as ultrasound. However, the invention may also be applied in a fixed-wire system. In a system using mobile devices, the most critical factor determining status is usually battery life. The separation may be measured as simple distance, or some related function such as time of flight or power cost, both of which can be determined by ensuring all status transmissions are made at a reference time or power level. (In an environment where attenuation varies, these values may not necessarily bear a simple relationship to distance). In a wired network separation may be determined as the time delay over the physical connections involved, and status by factors such as processing delay at the destination node.

In the described embodiment the central collecting devices (sinks) assign their status value to be zero. The more capable any other device is of receiving data (due to proximity to other such devices, long battery life, or low buffer content) the lower the status value it will grant itself. Similarly, a full buffer, or low battery life, will raise the status value of a device. By requiring that each device can only select other devices having lower status values, data can be quickly forwarded to the sinks (held at status value zero), while maintaining as even a load on the individual sensors in the network as possible due to the nature of the determination of status value. For example, if a device is doing more work than the rest of the network, for example by virtue of its location near to a destination device, then its battery level will decrease more quickly, leading to an increased relative status value, thereby inhibiting other sensors from continuing to forward data to it. In this way, the network is exceptionally good at distributing the load across multiple routes where they exist.

It is of course possible to assign status values in other ways, which fall within the scope of the invention. In particular, the values could be selected such that data passes to higher (rather than lower) valued devices - in other words, the sinks have the maximum allowable value instead of the minimum. However, in the following description, it will be assumed that all status values are positive or, in the case of sinks, zero, and that data passes from devices with high status values to those with low status values.

Alternative applications include multi-hop cellular communication, in which a device may operate with any cellular base station, in the same way as data may be transmitted to any of several data sinks.

The process can also be extended to ad-hoc networks where data has a specific target device. Such a system could be made to work if each device had several different status values each relating to a specific target. To reduce scaling problems in such a system, cluster heads may be defined so that data being sent to an individual device in a cluster is routed to the cluster head, and then onto the individual device. Such a system has been demonstrated to work on a computer simulation of a network with several hundred devices with only three levels of clusters. Each device needed only to remember its status value with respect to about thirty destination devices, namely its status value with respect to other devices within its own cluster, and its status level with respect to each other cluster.

An embodiment of the invention will now be described, by way of example only, with reference to the drawings in which

Figure 1 is a schematic diagram of a device according to the invention
Figure 2 is a diagram of part of an ad hoc network made up of devices of the kind shown in Figure 1
Figure 3 is a flow chart showing the cycle of sensing and transmission performed by an individual device
Figure 4 is a further flow chart, showing in more detail the processes used to identify a destination device and to transmit data to it.

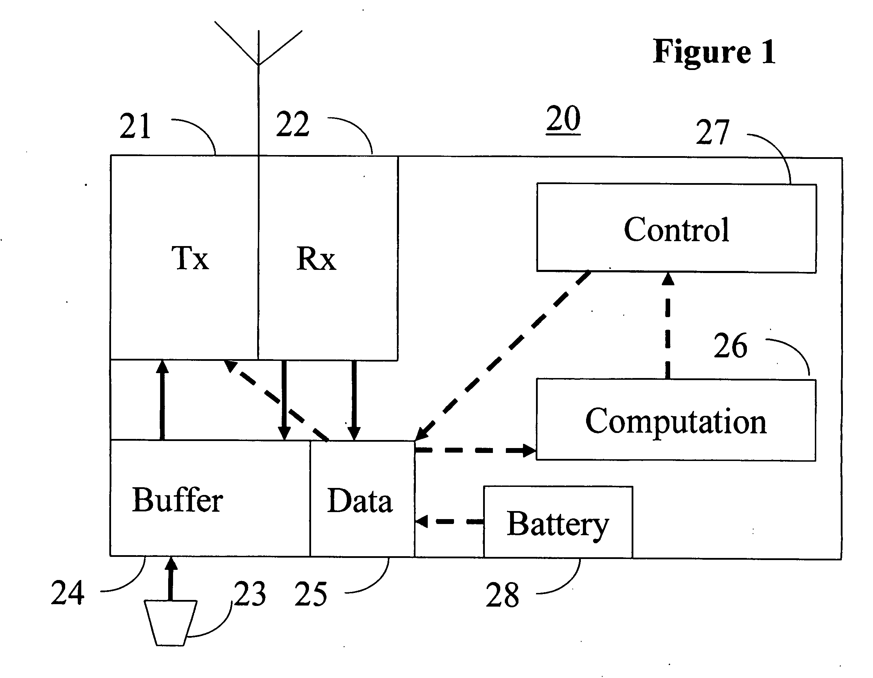

Figure 1 shows a device 20 according to the invention. It comprises a wireless transmitter 21 and a wireless receiver 22, and data collection means 23 which include position sensors, and environmental or physiological sensors for determining properties of the environment of the device, or of some object to which it is attached. There is also a data buffer 24 for storing payload data (that is to say, data that is to be transmitted to a destination for processing) and a data store 25 for operational data (that is to say, data required for the operatiln of the device and in particular for controlling the transmission of the payload data). There is also computation means 26 for processing the data collected by the data collection means 23 and stored in the data buffer 24, and control means 27 for controlling the operation of the device in response to outputs from the computation means 26. The device is powered by a battery 28 whose condition is monitored and the results stored in the data store 25 with other operating parameters. The power connections themselves are not depicted in this schematic diagram).

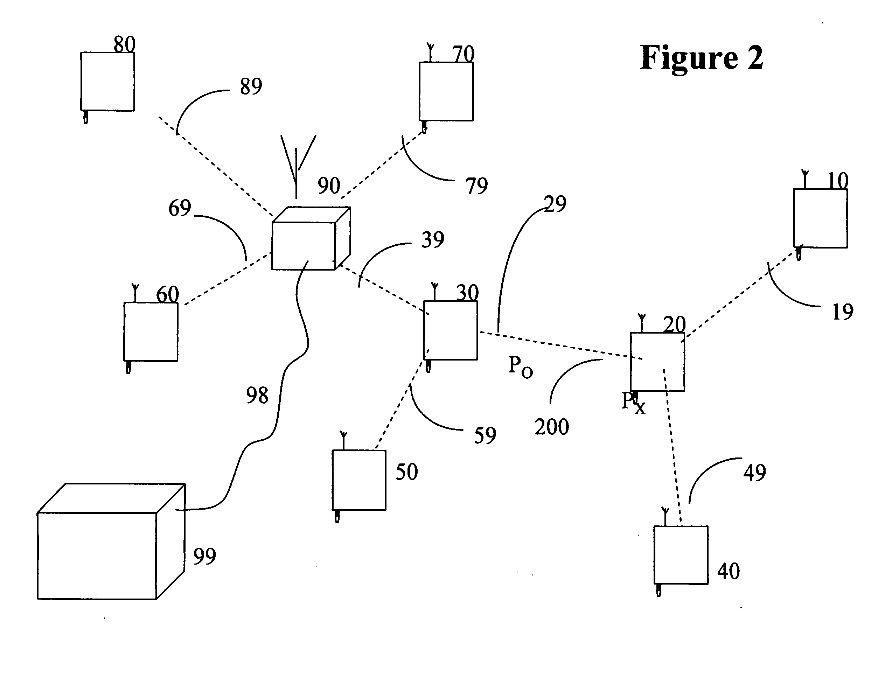

Figure 2 shows a network comprising several devices 10, 20, 30, 40, 50, 60, 70, 80, each of the type shown in Figure 1. These devices are free to move relative to each other through their environment, collecting data from their environment such as temperature, barometric pressure, salinity etc). This network of sensors is low-cost and can hence be haphazardly distributed in previously difficult to monitor areas. They may be carried by inanimate forces such as ocean or air currents, lava or glacier flows, or they may be attached to animals or human beings to monitor their movements or physiology, or to a vehicle to monitor its progress on a journey or to locate it if it is reported to have been stolen.

The devices 10, 20, 30, 40 etc shown in Figure 2 form an ad hoc wireless network 19, 29, 39, 49, etc. The wireless connections may use radio, sonar or any other transmission medium suitable for the environment in which the devices are expected to operate. Data collected by a device 20 (either by its own sensors 23, or relayed from another device 10) is transmitted to a destination 90 either directly or by means of one or more other devices 30. These other devices may also collect data. The destination 90 is a fixed receiver station, which will be referred to as an information "sink", and which collects data collected by the mobile terminals 10, 20, 30 etc for subsequent processing. There may be more than one sink in the network. The sink device 90 is more powerful than the sensor devices 10, 20 30 etc, both in terms of processing capability and power-consumption, and either have long-term storage facilities for the data, or a long-range transmission link 98 to a data-processing centre 99. The sensor devices 10, 20, 30 themselves have very limited battery power (allowing only short-range wireless transmissions), small processors and limited memory.

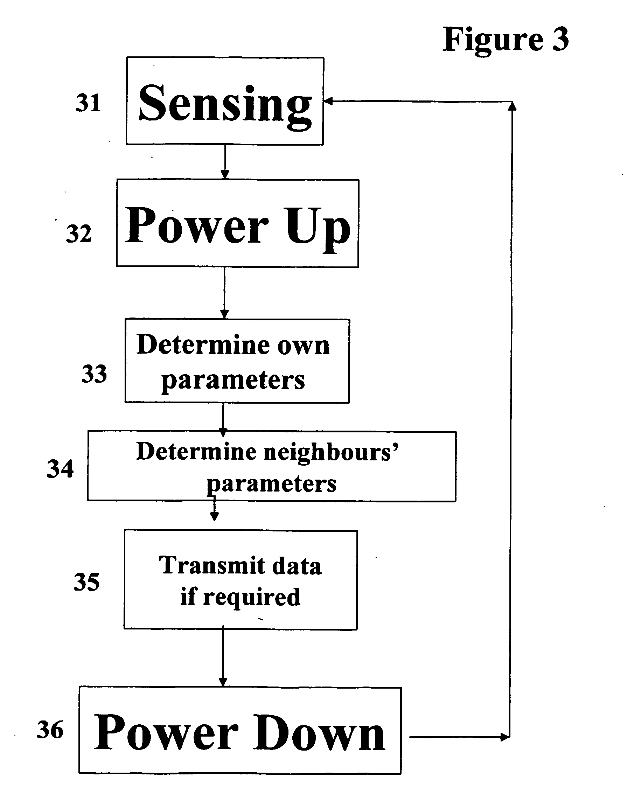

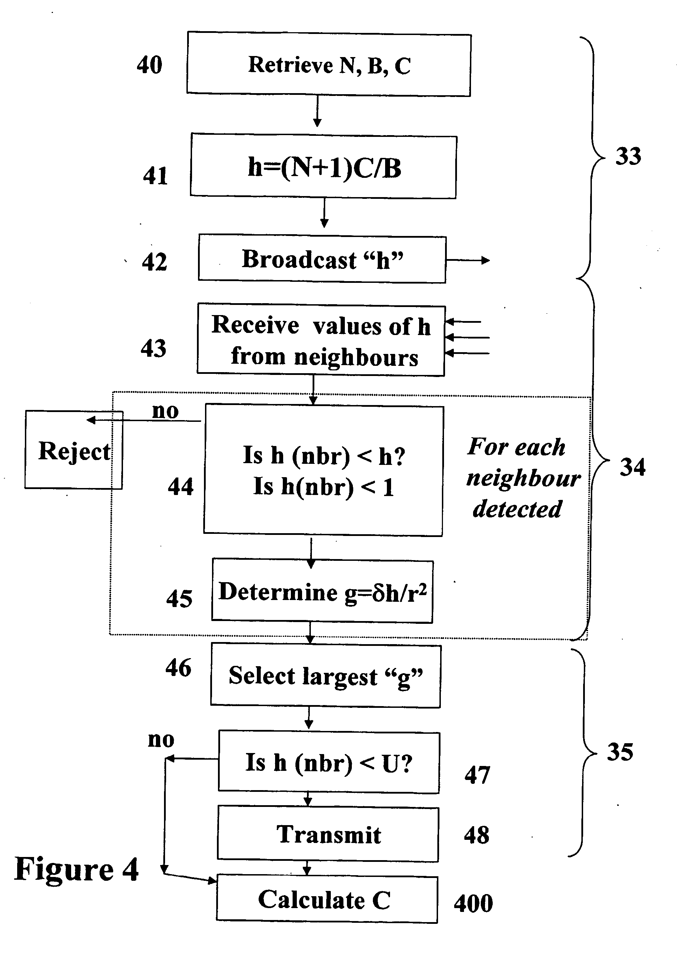

The operation of this embodiment will now be described, with reference to Figures 3 and 4.

The sensors accumulate data for a period of time in a 'low-power' consumption mode 31 before powering up (32) to determine if data needs to be transmitted (33,34), transmitting the data if appropriate (35), and then powering-down (36) for another period of data collection (31). The power-up (transmission) time can therefore be small in comparison to the power-down (sensing) time. In the preferred arrangement all devices synchronise the parameter-determination stage 33,34 as they need to exchange status data (step 34). However, having exchanged the status data, it is desirable that not all devices will transmit payload data simultaneously (step 35) to avoid interference problems that may occur, particularly if two devices (e.g. 10,40 in Figure 2) are tranmitting to the same device 30. Since each stage 31, 32, 33, 34, 35, 36 of the cycle is much longer than the individual transmission periods within each stage, this is readily achievable. The three stage cycle is as follows:

Power-down 36, sense 31
Power-up 32, determine and transmit condition of self to neighbours 33
Determine separation and condition of neighbours 34
(Power still up), forward data to (and receive data from) neighbours as required 35.

The sensing stage could be considerably longer than the other stages. This maximise the sensors' battery life by operating in a low power consumption mode for as much of the time as is possible. This assumes that devices can synchronise their power-up times. Alternatively, devices can be in a listening mode during power down time, in which they can receive both payload and status data from other devices but will not transmit.

In this embodiment the following assumptions are made:

1) All devices can communicate with all other devices within a certain range of communication, $r_{max}$, which has the same value for all devices.

2) At the parameter determination stage all devices are able to communicate their 'status value' to all other devices within $r_{max}$ at no cost to battery level (this simplification is valid if the cost of this small transmission is very much less than the cost of transmitting sensed data)

3) During the sensing stage of each cycle each sensor may generate a predetermined quantity of data, which will be referred to as one 'packet' of data. However, each packet may contain a large number of individual readings.

4) Data is aggregated by the devices and forwarded in groups of up to ten 'packets'. This constraint is applied to place an upper limit on the amount of data that may be transmitted. These packets may have been generated by the device during the current or previous cycles, or received from other devices. If there are more than ten packets in the buffer, any surplus remains in the buffer until the next cycle. Likewise, if the device fails to identify a suitable receiver, the packets remain in the buffer until the next cycle.

5) When forwarding data, the transmitter uses the minimum power necessary to reach its destination. Hence the cost (drain on battery level) of transmission is proportional to the square of the distance between the transmitting and receiving devices. Although some power is used by the receiving device, this is relatively small in comparison to the power that will be used to retransmit the data and can be disregarded.

The determination of parameters (step 33) will now be discussed in more detail, with reference to Figure 4.

Each mobile device (20 etc) initially measures and stores a number of attributes relating to itself (step 40). These attributes are:

Buffer size N a scalar quantity representing the amount of data awaiting transmission, expressed as a fraction of the total capacity of the buffer 24

Battery charge remaining, B a scalar quantity representing the expected life of the device

As the devices 10, 20 etc move around, the wireless links 19, 29, 39 etc between them have to re-arranged in order to provide the optimum network. As well as physical location, factors such as the spare capacity of the buffer store 24 and the battery 28 are taken into account in determining whether a wireless link 29 should be established between two devices 20, 30. The process by which this is done will be described in detail shortly.

Unit cost of forwarding C, which is determined at the end of the previous cycle (step 400) and is taken to be the cost in battery power per packet that would have been incurred the last time a suitable destination for a packet was found. This measure is used regardless of whether or not the packet was actually sent - for example there may have been insufficient battery power to transmit the packet to that destination. It should also be noted that the devices are mobile, so the actual cost of forwarding may be different from this historic estimate.

Each sensor next calculates its 'status value' h (step 41), which is calculated to be:

$$h = (N + k) \, C \, / \, B$$

where N = number of packets of data currently in buffer
B = battery level
C = cost of forwarding one packet.
k = a small constant whose function will be described shortly

The value B/C is therefore an estimate of the number of transmissions that the device will be capable of making on its remaining battery power, assuming that each transmission will use the same amount of power as the most recent calculation.

Consequently, if a device would just be able to send all of the data in its buffer to a suitable neighbour (B/C = N) then it will have a status value h=1+k/N. A threshold value is set at this value, or slightly lower to ensure the device is not completely drained. This threshold value will be referred to below as "M". Since the value of k is small, it is convenient to set M=1

In this embodiment, data sinks are allocated a status value h=0. For other devices, because of the constant "k", the value of "h" is always greater than zero - consequently, even if there are no packets in the buffer (N=0), it will have a status value h = kC/B. Since k is a small positive number, this minimum value for h is slightly higher than the zero status value attributed to a sink. This ensures that data will preferentially be sent to a sink rather than to a relaying device if a sink is available. Other mathematical ways of ensuring this are possible: for example giving sinks a negative value for "h", in which case the constant "k" can be set to zero, and empty buffers (N=0) have a status value h=0.

If the device has already got too much data in its buffer to be able to forward without exhausting its power supply (N C > B) it will have a status value h greater than the threshold value M. If it estimates that it may be able to forward some data in addition to that it already holds on its buffer (N C < B), it will have a positive non-zero status value h less than the threshold value M. If the status value h is equal to the threshold value M, then it will only just be able to transmit the data it already holds (N C = B). Hence, devices should not accept data from other devices if their current status value is equal to or greater than the threshold value M.

Each device next broadcasts (step 42) its current status value h to any other devices within radio range, and receives corresponding values from any neighbours it may detect (step 43) so that each device has information on its own and all of its neighbour's status values. Each device also determines the separation "r" (and hence potential cost of transmission) from each of its neighbours (step 43). This may be done in a number of ways. If the devices are sufficiently accurately synchronised, time delay measurement techniques may be used to determine distance. Alternatively, if all devices transmit at a known reference power level, the receive power can be used to determine the separation of the devices (the power required is proportional to the square of the distance). Alternatively, the devices may each need to determine their own position to form part of their payload data, and that information can be transmitted with the status value. Alternatively, provided at least one device can determine its absolute position, the absolute positions of all the others can be derived, as discussed in International Patent Specification WO03/107595, which provides a method of estimating the location of a device within a network of devices each of which forms a device of the network, the method including the steps of:

obtaining information specifying the location or estimated location of one or more neighbouring devices;
measuring the distance to said one or more neighbouring devices; and

iteratively modifying an estimated location of the device, such as to improve the consistency between the estimated location of the device and the location or estimated location of the one or more neighbouring devices, as determined from the obtained information specifying the location or estimated location of the one or more neighbouring devices, on the one hand and the measured distances to each of the one or more neighbouring devices on the other hand.

Each device next determines to which other device, if any, it should transmit data. Firstly it identifies any that are excluded from consideration (step 44). A device will not forward data to any device that is at a higher status value than itself, that is to say h(neighbour) > h. Nor will it transmit to any device of status value greater than the threshold value M, (which it will be recalled takes a value close to 1). That is to say if B< (N+k)C, the remaining battery life B is less than that required to send the N packets already in its buffer, assuming each requires resource C. The device therefore already has more data than it is expecting to be able to forward. Devices for which h>M should therefore not receive further data until the relative positions of the devices change such that the value of C falls to a value less than B/(N+k).

If no neighbouring devices meet these two criteria - in other words they all have status values higher than that of the device under consideration, and/or greater than the threshold M, then the subject device recalculates the value C (see step 400 below) and returns to the power-down phase 35.

For any devices not so excluded, the device determines a gradient "g" of status value drop between a transmitting device and a potential receiving device (step 45):

$$\text{Gradient} = (h[\text{transmitter}]-h[\text{receiver}])/r^2 ,$$

where r is the distance between the two devices previously determined (step 43). The square of the distance is used to reflect the properties of radio propagation, since the power required for transmission varies with the square of distance.

The device then selects the device to which the biggest gradient exists (step 46).

One further calculation is made. An "urgency" value $U = (t/T)^n$ is determined, where

t = elapsed time from start of data gathering process,

T = expected duration of data gathering process,

and n is a constant selected in a manner to be described shortly.

This value U is a measure of the time-sensitiveness of the data in the transmission process, and hence the speed with which it is to be returned to the sinks. It is assumed the sensors are mobile. At the beginning of the experiment (when t/T has a low value) it is preferable to wait for sensors that are a long way from a sink to move around so that data collected by such sensors is not transmitted a long distance through the network, draining network resources. Towrads the end of the experiment, however, any data not transmitted risks being lost altogether, and battery conservation is no longer important.

By varying the value of the exponent "n", the sensitivity can be adapted to the requirements of the data capture process. If the data is very time-sensitive, and needs to be transmitted back to sinks soon after being collected then a small value of n is required (so that U rises to a value of unity very early in the process and therefore almost always exceeds the status values "h"). Similarly if the buffers of individual sensor devices are small, a small value of n will reduce the number of data packets 'dropped' by overfull buffers. If the network collects most of its data at the beginning of the experiment then a small value of n is superior.

Larger values of "n", causing the urgency U to stay low until late in the data-gathering process, are suitable for networks that are likely to change rapidly (in terms of network topology or the quantity and location of sensed data). This prevents devices that initially are not sensing much data, but will later on in the experiment, from using valuable battery resources early in the experiment relaying data from other devices when alternative approaches may be possible later on.

Provided the status value h of the target device is less than the value U, (step 47) the device then forwards up to ten packets of data to the selected neighbouring device (step 48).

This actual cost of transmission is now calculated (step 400) as described above, to supply the value "C" for the next cycle

When a device 20 has identified a device 30 to which data can be forwarded, it retrieves data from its buffer 24 and transmits it to the target 30. The device 30 then repeats the process of identifying a suitable neighbour and so on, until the data reaches the sink 90. If no suitable device is identified, the data is stored in the buffer 24 until the movements of the devices brings a suitable device into range. If a device 20 is cut off from any path to a sink 90 it can simply store any payload data in the buffer 24 until the movements of the devices re-establishes a feasible route. If the network is sparsely populated, such that devices are widely separated, most data transmissions may only occur when a device 20 comes within direct range of a sink 90. In densely populated networks paths having a larger number of hops 19, 29, 39 will be more common. The process is flexible enough to cope with a wide range of circumstances, in terms of network topology and device mobility, without such variations requiring special treatment.

The process described previously has been simulated in several different circumstances. In the simplest case, where the network is static and all sensors sense at the same rate throughout the duration of the experiment, the performance is close to the theoretical ideal, nearly as much data as could possibly be transmitted through the network being recovered. Adding increased complexity to the system with mobile sensors and uneven and rapidly changing rates of data sensing can be expected to have an impact on the ability of the network to recover a maximum quantity of data, but in the simulations this process performed better than existing techniques, and at a level approaching that achieved by the process described in the aforementioned specification WO2005/006668. The present invention has the advantage over the earlier and more complex system that the individual sensors in the network only need to determine their separations from each other, and not their relative positions, determination of which may not be straightforward in all envisaged circumstances, and that fewer calculations are required to be performed, which is important for sensor devices having limited power resources.

**Claims**

1.   A data relay device (20), the device having
receiving means (22) for receiving payload data from a data source (10),
a buffer (24) for storing payload data for subsequent transmission,
payload transmission means (21) for transmitting the payload data to a receiving device (30) identified as being suitable for receiving such data,
and means for determining the separation r of the device (20) from other devices (10, 30, 40),
having status data generation means (26) for generating for the device a scalar status value h, the status value being derived from the quantity of data N in the buffer store (24) and the separation r of the device (20) from other devices (10, 30, 40)
status value transmitter means for transmitting the status value to other devices (10, 30, 40)
means (25) for receiving status values from similar devices (10, 30, 40), selection means (27) for identifying, from its own status value, and the status values received from other devices, a receiving device (30) to which payload data may be forwarded,
wherein the selection means (27) is arranged to only identify a suitable receiving device If the scalar status value h of the receiving device meets one or more threshold criteria,
**characterised in that** the threshold criteria include a requirement that the remaining battery power of the selected receiving device is at least sufficient to transmit all the data currently in the buffer (24).

2.   A data relay device according to claim 1, comprising means (22) for receiving payload data transmitted by other similar devices (10, 40).

3.   A data relay device according to claim 1 or claim 2, further comprising a data source (23)

4.   A data relay device according to any preceding claim, having means (27) for selecting a further threshold criterion as a function of elapsed time from a predetermined start point.

5.   A data relay device according to any preceding claim, further comprising condition-monitoring means (25, 28) for monitoring the expected lifetime of the device, and adjusting the scalar status value accordingly.

6.   A data relay device according to any preceding claim, wherein the separation between devices (20, 30) is determined from the power required to make a transmission between them.

7.   A data relay device according to any preceding claim, comprising means for determining the power that would be required to transmit payload data to an identified receiving device (30), and means (25) for generating a scalar status value related to that power requirement.

8.   A data relay device according to claim 7, wherein the identified receiving device (30) on which the power determination is based is the device selected for transmission on a previous determination.

9.   A data relay device according to claim 7 or 8, wherein the scalar status value h is determined by the value **(N + k) C / B**
where N = number of packets of data currently in the buffer
B = battery level

C = power requirement of forwarding to the identified receiving device.

k is a constant

10. A method of operating a plurality of data relay devices (10,20,30,40,50,60,70,80), comprising:

collecting data in buffer stores (24) in one or more such devices,

for each data relay device (20) identifying a respective receiving device (30) suitable for forwarding payload data to it, and

transmitting the payload data to the identified receiving device (30),

each device defining a scalar status value h for the device determined by the quantity of data stored in its buffer (24) and the separation of the device from other devices (10, 20, 30)

exchanging data between the devices (10, 20, 30 etc) relating to their status values,

each device identifying, from its own status value, and the status values received from other devices, a destination device (30) to which payload data may be forwarded,

wherein data is only transmitted from a first device (20) to a second device (30) if the scalar status value of the second device meets one or more predetermined threshold criteria, and **characterised in that** the threshold criteria include a requirement that the remaining battery power (28) is at least sufficient to transmit all the data currently in the buffer (24).

11. A method according to claim 10, wherein the status data includes a measure of the expected lifetime of the device (20).

12. A method according to claim 10 or 11 wherein payload data is transmitted, by means of one or more of the wireless relay devices (20, 30), to a target sink device (90) defined by a predetermined scalar status value.

13. A method according to claim 10, 11 or 12, wherein the power that would be required to transmit payload data to an identified receiving device (30) is determined, and a scalar status value is generated related to that power requirement.

14. A method according to claim 13, wherein the identified receiving device (30) on which the power determination is based is the device selected for transmission on a previous determination.

15. A method according to claim 13 or 14, wherein the scalar status value h is determined by the value **(N + k) C / B**

where N = number of packets of data currently in the buffer

B = battery level

C = power requirement of forwarding to the identified receiving device

k is a constant

**Patentansprüche**

1. Datenrelaisvorrichtung (20) mit:

einer Empfangseinrichtung (22) zum Empfangen von Nutzlastdaten von einer Datenquelle (10),

einem Puffer (24) zum Speichern von Nutzlastdaten für eine anschließende Übertragung,

einer Nutzlastübertragungseinrichtung (21) zum Übertragen der Nutzlastdaten an eine Empfangsvorrichtung (30), die als für das Empfangen solcher Daten geeignet identifiziert wird,

und einer Einrichtung zum Bestimmen der Trennung r der Vorrichtung (20) von anderen Vorrichtungen (10, 30, 40),

mit einer Statusdaten-Erzeugungseinrichtung (26) zum Erzeugen eines skalaren Statuswerts h für die Vorrichtung, wobei der Statuswert aus der Menge von Daten N im Pufferspeicher (24) und der Trennung r der Vorrichtung (20) von anderen Vorrichtungen (10, 30, 40) abgeleitet wird,

einer Statuswert-Sendereinrichtung zum Übertragen des Statuswerts an andere Vorrichtungen (10, 30, 40),

einer Einrichtung (25) zum Empfangen von Statuswerten von ähnlichen Vorrichtungen (10, 30, 40),

einer Auswahleinrichtung (27) zum Identifizieren einer Empfangsvorrichtung (30), an welche Nutzlastdaten weitergeleitet werden können, aus ihrem eigenen Statuswert und den von anderen Vorrichtungen empfangenen Statuswerten,

wobei die Auswahleinrichtung (27) dazu angeordnet ist, nur eine geeignete Empfangsvorrichtung zu identifizieren, wenn der skalare Statuswert h der Empfangsvorrichtung ein oder mehrere Schwellenkriterien erfüllt, **dadurch gekennzeichnet, dass** die Schwellenkriterien eine Anforderung einschließen, dass die übrige Batterieleistung der ausgewählten Empfangsvorrichtung zumindest ausreichend ist, um alle derzeit im Puffer (24) befindlichen Daten zu übertragen.

2. Datenrelaisvorrichtung nach Anspruch 1, mit einer Einrichtung (22) zum Empfangen von Nutzlastdaten, die von anderen ähnlichen Vorrichtungen (10, 40) übertragen werden.

3. Datenrelaisvorrichtung nach Anspruch 1 oder Anspruch 2, weiterhin mit einer Datenquelle (23).

4. Datenrelaisvorrichtung nach irgendeinem vorhergehenden Anspruch, mit einer Einrichtung (27) zum Auswählen eines weiteren Schwellenkriteriums als Funktion der verstrichenen Zeit ab einem vorgegebenen Startpunkt.

5. Datenrelaisvorrichtung nach irgendeinem vorhergehenden Anspruch, weiterhin mit einer Zustandsüberwachungseinrichtung (25, 28) zum Überwachen der erwarteten Betriebszeit der Vorrichtung und zum dementsprechenden Einstellen des skalaren Statuswerts.

6. Datenrelaisvorrichtung nach irgendeinem vorhergehenden Anspruch, wobei die Trennung zwischen Vorrichtungen (20, 30) aus der Leistung bestimmt wird, welche erforderlich ist, um eine Übertragung zwischen ihnen vorzunehmen.

7. Datenrelaisvorrichtung nach irgendeinem vorhergehenden Anspruch, mit einer Einrichtung zum Bestimmen der Leistung, die erforderlich wäre, um Nutzlastdaten an eine identifizierte Empfangsvorrichtung (30) zu übertragen, und einer Einrichtung (25) zum Erzeugen eines skalaren Statuswerts, der jene Leistungsanforderung betrifft.

8. Datenrelaisvorrichtung nach Anspruch 7, wobei die identifizierte Empfangsvorrichtung (30), auf der die Leistungsbestimmung beruht, die Vorrichtung ist, die für die Übertragung bei einer vorhergehenden Bestimmung ausgewählt wurde.

9. Datenrelaisvorrichtung nach Anspruch 7 oder 8, wobei der skalare Statuswert h durch den Wert **(N + k) C/B** bestimmt wird,
   worin

   N = Anzahl der derzeit im Puffer befindlichen Datenpakete
   B = Batteriepegel
   C = Leistungsanforderung der Weiterleitung an die identifizierte Empfangsvorrichtung
   k eine Konstante ist.

10. Verfahren zum Betreiben mehrerer Datenrelaisvorrichtungen (10, 20, 30, 40, 50, 60, 70, 80), mit:

    Sammeln von Daten in Pufferspeichern (24) in einer oder mehreren solchen Vorrichtungen,
    für jede Datenrelaisvorrichtung (20) Identifizieren einer jeweiligen Empfangsvorrichtung (30), die dazu geeignet ist, Nutzlastdaten an diese weiterzuleiten, und
    Übertragen der Nutzlastdaten an die identifizierte Empfangsvorrichtung (30),
    wobei jede Vorrichtung einen skalaren Statuswert h für die Vorrichtung definiert, der durch die Menge der in ihrem Puffer (24) gespeicherten Daten und die Trennung der Vorrichtung von anderen Vorrichtungen (10, 20, 30) bestimmt wird,
    Austauschen von Daten zwischen den Vorrichtungen (10, 20, 30 usw.), die ihre Statuswerte betreffen,
    wobei jede Vorrichtung aus ihrem eigenen Statuswert und den von anderen Vorrichtungen empfangenen Statuswerten eine Zielvorrichtung (30) identifiziert, an welche Nutzlastdaten weitergeleitet werden können,
    wobei Daten nur von einer ersten Vorrichtung (20) zu einer zweiten Vorrichtung (30) übertragen werden, wenn der skalare Statuswert der zweiten Vorrichtungen ein oder mehrere vorgegebene Schwellenkriterien erfüllt, und
    **dadurch gekennzeichnet, dass** die Schwellenkriterien eine Anforderung beinhalten, dass die übrige Batterieleistung (28) zumindest ausreichend ist, um alle derzeit im Puffer (24) befindlichen Daten zu übertragen.

11. Verfahren nach Anspruch 10, wobei die Statusdaten ein Maß der erwarteten Betriebsdauer der Vorrichtung (20) beinhalten.

12. Verfahren nach Anspruch 10 oder 11, wobei Nutzlastdaten mittels einer oder mehrerer der drahtlosen Relaisvorrichtungen (20, 30) an eine Zielsenkvorrichtung (90) übertragen werden, die durch einen vorgegebenen skalaren Statuswert definiert ist.

**13.** Verfahren nach Anspruch 10, 11 oder 12, wobei die Leistung, die erforderlich wäre, um Nutzlastdaten an eine identifizierte Empfangsvorrichtung (30) zu übertragen, bestimmt und ein skalarer Statuswert erzeugt wird, der jene Leistungsanforderung betrifft.

**14.** Verfahren nach Anspruch 13, wobei die identifizierte Empfangsvorrichtung (30), auf der die Leistungsbestimmung beruht, die Vorrichtung ist, welche für eine Übertragung bei einer vorhergehenden Bestimmung ausgewählt wurde.

**15.** Verfahren nach Anspruch 13 oder 14, wobei der skalare Statuswert h durch den Wert **(N + k) C/B** bestimmt wird, worin

N = Anzahl der derzeit im Puffer befindlichen Datenpakete
B = Batteriepegel
C = Leistungsanforderung der Weiterleitung an die identifizierte Empfangsvorrichtung
k eine Konstante ist.

**Revendications**

**1.** Dispositif relais de données (20), le dispositif comprenant :

des moyens de réception (22), pour recevoir des données de charge utile provenant d'une source de données (10),
une mémoire tampon (24), pour stocker des données de charge utile pour une transmission subséquente,
des moyens de transmission de charge utile (21), pour transmettre les données de charge utile à un dispositif récepteur (30) identifié comme convenant pour recevoir de telles données,
et des moyens pour déterminer la séparation r du dispositif (20) vis-à-vis d'autres dispositifs (10, 30, 40), comprenant des moyens de génération de données d'état (26), pour générer pour le dispositif une valeur d'état scalaire h, la valeur d'état étant dérivée de la quantité de données N présentes dans la mémoire tampon (24) et de la séparation r du dispositif (20) vis-à-vis d'autres dispositifs (10, 30, 40),
des moyens transmetteurs de valeur d'état, pour transmettre la valeur d'état à d'autres dispositifs (10, 30, 40),
des moyens (25) pour recevoir des valeurs d'état à partir de dispositifs (10, 30, 40) similaires,
des moyens de sélection (27), pour identifier, à partir de sa propre valeur d'état, et des valeurs d'état reçues d'autres dispositifs, un dispositif récepteur (30) auquel des données de charge utile peuvent être transmises,
dans lequel les moyens de sélection (27) sont agencés pour identifier un dispositif récepteur approprié, seulement si la valeur d'état scalaire h du dispositif récepteur satisfait à un ou plusieurs critères seuils,
**caractérisé en ce que** les critères seuils comprennent une exigence, selon laquelle l'énergie de batterie restante du dispositif récepteur sélectionné est au moins suffisante pour transmettre la totalité des données actuellement présentes dans la mémoire tampon (24).

**2.** Dispositif relais de données selon la revendication 1, comprenant des moyens (22) pour recevoir des données de charge utile, transmises par d'autres dispositifs (10, 40) similaires.

**3.** Dispositif relais de données selon la revendication 1 ou la revendication 2, comprenant en outre une source de données (23).

**4.** Dispositif relais de données selon l'une quelconque des revendications précédentes, comprenant des moyens (27), pour sélectionner un autre critère seuil, en fonction du temps écoulé depuis un moment de départ prédéterminé.

**5.** Dispositif relais de données selon l'une quelconque des revendications précédentes, comprenant en outre des moyens de surveillance de condition (25, 28), pour surveiller la durée de vie escomptée du dispositif et ajuster de manière correspondante la valeur d'état scalaire.

**6.** Dispositif relais de données selon l'une quelconque des revendications précédentes, dans lequel la séparation entre dispositifs (20, 30) est déterminée à partir de l'énergie requise pour opérer une transmission entre eux.

**7.** Dispositif relais de données selon l'une quelconque des revendications précédentes, comprenant des moyens pour déterminer l'énergie qui serait nécessaire pour transmettre des données de charge utile à un dispositif récepteur (30) identifié, et des moyens (25) pour générer une valeur d'état scalaire liée à cette exigence d'énergie.

8. Dispositif relais de données selon la revendication 7, dans lequel le dispositif récepteur (30) identifié, sur lequel la détermination d'énergie est basée, est le dispositif sélectionné pour transmission lors d'une détermination antérieure.

9. Dispositif relais de données selon la revendication 7 ou 8, dans lequel la valeur d'état scalaire h est déterminée par la valeur (N+k) C/B
dans laquelle N = nombre de paquets de données actuellement dans la mémoire tampon,
B = niveau de la batterie,
C = exigence énergétique de transmission au dispositif récepteur identifié,
K est une constante.

10. Procédé de fonctionnement d'une pluralité de dispositifs relaiss de données (10, 20, 30, 40, 50, 60, 70, 80), comprenant :

la collecte de données dans des mémoires tampon (24), dans un ou plusieurs tels dispositifs ;
pour chaque dispositif relais de données (20), l'identification d'un dispositif récepteur (30) respectif, convenant pour transmission de données de charge utile à celui-ci, et
la transmission des données de charge utile au dispositif récepteur (30) identifié,
chaque dispositif définissant pour le dispositif une valeur d'état scalaire h, déterminée par la quantité de données stockées dans son tampon (24) et par la séparation du dispositif vis-à-vis d'autres dispositifs (10, 20, 30),
l'échange de données entre les dispositifs (10, 20, 30 etc.) concernant leurs valeurs d'état,
chaque dispositif identifiant, à partir de sa propre valeur d'état, et des valeurs d'état reçues d'autres dispositifs, un dispositif destinataire (30) auquel des données de charge utile peuvent être transmises,
dans lequel des données sont transmises, d'un premier dispositif (20) à un deuxième dispositif (30), seulement si la valeur d'état scalaire du deuxième dispositif satisfait à un ou plusieurs critères seuils prédéterminés, et **caractérisé en ce que** les critères seuils comprennent une exigence, selon laquelle l'énergie de batterie (28) restante est au moins suffisante pour transmettre la totalité des données actuellement présentes dans la mémoire tampon (24).

11. Procédé selon la revendication 10, dans lequel les données d'état comprennent une mesure du temps de vie escompté du dispositif (20).

12. Procédé selon la revendication 10 ou 11, dans lequel des données de charge utile sont transmises, au moyen d'un ou plusieurs dispositifs relais sans fil (20, 30), à un dispositif collecteur de données cible (90), défini par une valeur d'état scalaire prédéterminée.

13. Procédé selon la revendication 10, 11 ou 12, dans lequel l'énergie, qui serait nécessaire pour transmettre des données de charge utile à un dispositif récepteur (30) identifié, est déterminée, et une valeur d'état scalaire est générée, concernant cette exigence en énergie.

14. Procédé selon la revendication 13, dans lequel le dispositif récepteur (30) identifié, sur lequel la détermination d'énergie est basée, est le dispositif sélectionné pour transmission lors d'une détermination antérieure.

15. Procédé selon la revendication 13 ou 14, dans lequel la valeur d'état scalaire h est déterminée par la valeur (N+k) C/B
dans laquelle N = nombre de paquets de données actuellement dans la mémoire tampon ,
B = niveau de la batterie,
C = exigence énergétique de transmission au dispositif récepteur identifié,
K est une constante.

Figure 1

Figure 2

EP 1 665 658 B1

**Figure 3**

31 | **Sensing**

32 | **Power Up**

33 | Determine own parameters

34 | Determine neighbours' parameters

35 | Transmit data if required

36 | **Power Down**

| | |
|---|---|
| **40** | Retrieve N, B, C |

$$h=(N+1)C/B$$

**41**

**42** Broadcast "h"

**43** Receive values of h from neighbours

} **33**

**Reject**

**no**

**44** Is h (nbr) < h?
Is h(nbr) < 1

*For each neighbour detected*

**45** Determine $g=\delta h/r^2$

} **34**

**46** Select largest "g"

**no**

**47** Is h (nbr) < U?

**48** Transmit

} **35**

**400** Calculate C

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005006668 A

- WO 03107595 A

**Non-patent literature cited in the description**

- **C PERKINS ; P BHAGWAT.** Highly Dynamic Destination-Sequenced Distance-Device pair Routing (DSDV) for mobile computers. *Proceedings of the SIGCOMM '94 Conference on Communications Architectures, Protocols and Applications,* August 1994, 234-244
- **VD PARK ; MS CORSON.** A Highly Adaptive Distributed routing Algorithm for Mobile Wireless Networks. *Proceedings of INFOCOM '97,* April 1997, 1405-1413
- **DB JOHNSON.** Routing in Ad hoc Networks of Mobile Hosts. *Proceedings of the IEEE Workshop on Mobile Computing Systems and Applications,* December 1994, 158-163
- **C PERKINS.** *Ad hoc On Demand Distance Device pair (AODV) Routing,* October 1999, Internet-Draft, draft-ietf-manet-aodv-04.txt
- **J BROCH ; DA MALTZ ; DB JOHNSON ; Y-C HU.** A Performance Comparison of Multi-Hop Wireless Ad Hoc Network Routing Protocols. *Proceedings of the Fourth Annual ACM/IEEE International Conference on Mobile Computing and Networking, Mobicom '98,* October 1998

- Power-Aware Routing in Mobile Ad hoc Networks. *Proceedings of the Fourth Annual ACM/IEEE International Conference on Mobile Computing and Networking (MobiCom,* October 1998
- Energy-Efficient Routing Protocols for Wireless Microsensor Networks. *Proceedings of the 33rd International Conference on System Sciences (HICSS '00,* January 2000
- **Y. XU ; J. HEIDEMANN ; D. ESTRIN.** Habitat Monitoring: Application Driver for Wireless Communications Technology. *ACM SIGCOMM Workshop on Data Communications in Latin America and the Caribbean, Costa Rica,* April 2001
- Adaptive energy-conserving routing for multihop ad hoc networks. *Tech. Rep. 527, USC/Information Sciences Institute,* October 2000
- **DE. CULLER ; J HILL ; P BUONADONNA ; R SZEWCZYK ; A WOO.** A Network-Centric Approach to Embedded Software for Tiny Devices. *DARPA Workshop on Embedded Software*
- **STOJMENOVIC et al.** Power Aware Localised Routing in Wireless Networks. *IEEE Transactions on Parallel and Distributed Systems,* November 2001
- **TIAN HE et al.** *SPEED: A Real Time Routing Protocol for Sensor Networks,* 2002